# EUROPEAN PATENT APPLICATION

(11) **EP 3 939 920 A1**
(43) Date of publication of application: **19.01.2022**
(21) Application number: 21181587.3
(22) Date of filing: 24.06.2021
(51) Int. Cl.: B65H 75/44, B60L 53/18, H02G 11/02

(54) **NON-CONTACT ELECTRIC WIRE REEL AND ELECTRIC VEHICLE CHARGING APPARATUS HAVING THE SAME**

(30) Priority: 13.07.2020 KR 20200086364
(71) Applicant: Joong Ang Control Co., Ltd., Chungcheongbuk-do 28443 (KR)
(72) Inventor: SHIN, Hyeon kyun, Goyang-si (KR)
(74) Representative: Schön, Christoph

(57) **Abstract**

The present invention provides a non-contact electric wire reel (10) including: a cable (100) including a plurality of electric wires extending by sequentially including a first electric wire portion (110), a second electric wire portion (120) and a third electric wire portion (130) in its longitudinal direction; a rotation drum (200) configured to allow the cable (100) to be wound on or unwound from its outer circumferential surface, and including one or more rotation holes (210, 220); and a fixation portion (300) including a fixation hole (310) remaining fixed against the rotation of the rotation drum (200), wherein the second electric wire portion (120) of the cable (100) is disposed in a twist section partitioned by the rotation holes (210, 220) and the fixation hole (310), and twisted or untwisted by the rotation of the rotation drum (200).

Accordingly, the present invention may supply a large amount of power to a load by allowing the electric wire (100) to be wound on or unwound from the rotation drum (200) without using any contact such as a slip ring or a brush.

## Description

### CROSS-REFERENCE TO RELATED APPLICATION(S)

This application claims benefit of priority to Korean Patent Application No. 10-xxxx-xxxxxx filed on xxx, xxxx in the Korean Intellectual Property Office, the disclosure of which is incorporated herein by reference in its entirety.

### BACKGROUND

### 1. FIELD

The present invention relates to a non-contact electric wire reel and an electric vehicle charging apparatus having the same, and more particularly, to a non-contact electric wire reel capable of supplying a large amount of power to a load by allowing an electric wire to be wound on or unwound from a rotation drum without using any contact such as a slip ring or a brush, and an electric vehicle charging apparatus having the same.

### 2. DESCRIPTION OF RELATED ART

In general, a reel may refer to a device in which a line-type supply pipe for power supply and use is wound on a rotation drum by using a spring or another apparatus, drawn out as much as a required length and used, and is wound up after use and then stored. There are various types of reels based on the use.

Among the reels, an electric wire reel or cable reel is a reel used to wind a cable to stably supply electricity in various industrial sites and the like. A conventional electric wire reel may have a supply cable and an extension cable separated from each other, the supply cable receiving electricity from a power supply and the extension cable supplying electricity to a load by being wound on or unwound from the rotation drum. The reason is to prevent the supply cable from being twisted and wrung to be disconnected or broken as the rotation drum is rotated together when the extension cable is wound or unwound.

Therefore, the conventional electric wire reel is required to include a contact conducting a current between the supply cable and the extension cable, and the contact may be configured to conduct the current between the supply cable and the extension cable using a slip ring and a brush, like a structure in which electricity is supplied to a rotation rotor in a direct current (DC) motor.

However, the conventional electric wire reel includes the contact, and there is thus a limit to handling large power due to problems such as a spark occurring due to the contact and heat occurring due to contact resistance.

In particular, for an electric vehicle in rapidly increasing demand in recent years, there is also an increasing need for the electric wire reel used in an electric vehicle charging apparatus. However, the conventional electric wire reel including the contact has a limitation to be applied to the electric vehicle charging apparatus requiring high current charging.

In addition, for this reason, a cable for charging the electric vehicle is thus often placed to be hung without being wound on the electric wire reel, which results in frequent management issues such as a disconnected cable or a cable having a stripped sheath.

### SUMMARY

The present invention has been made in an effort to solve the problems described above, and an object of the present invention is to provide a non-contact electric wire reel capable of supplying a large amount of power to a load by allowing an electric wire to be wound on or unwound from a rotation drum without using any contact such as a slip ring or a brush, and an electric vehicle charging apparatus having the same.

Objects of the present invention are not limited to the above-mentioned objects. That is, other objects that are not mentioned may be obviously understood by those skilled in the art to which the present invention pertains from the following description.

According to an aspect of the present invention, a non-contact electric wire reel includes: a cable including a plurality of electric wires extending by sequentially including a first electric wire portion, a second electric wire portion and a third electric wire portion in its longitudinal direction; a rotation drum configured to allow the cable to be wound on or unwound from its outer circumferential surface by rotation, and including one or more rotation holes each rotated in a rotational direction of the rotation drum; and a fixation portion disposed on one side of the rotation drum in a direction of a rotation axis of the rotation drum, and including a fixation hole remaining fixed against the rotation of the rotation drum, wherein the second electric wire portion of the cable is disposed in a twist section partitioned by the rotation holes and the fixation hole, and twisted or untwisted by the rotation of the rotation drum.

The rotation drum may have a shape of a cylinder having a hollow portion surrounded by its inner circumferential surface to accommodate a portion of the cable.

At least a portion of the twist section may be formed in the hollow portion.

The rotation drum may include a rotation plate formed in the hollow portion in a direction transverse to the rotation axis to partition the twist section together with the fixation hole, and the one or more rotation holes may include: a first rotation hole formed in the rotation plate for the cable to pass through and partitioning the second electric wire portion and the third electric wire portion from each other; and a second rotation hole formed for the hollow portion and the outside of the rotation drum to communicate with each other, and through which the third electric wire portion passes.

The fixation portion may include a fixed shaft portion including the fixation hole formed therein and inserted into one side of the hollow portion of the rotation drum to support the rotation of the rotation drum.

A distance between the fixation hole and the rotation holes in the direction of the rotation axis may be changed for the twist section of the second electric wire portion to have a smaller length when the second electric wire portion is twisted.

The rotation drum may have a shape of a cylinder having a hollow portion to accommodate the second electric wire portion, and the fixation portion may be introduced into the hollow portion to be moved toward the rotation holes in the direction of the rotation axis as the second electric wire portion is twisted.

The non-contact electric wire reel according to the present invention may further include: a conduit accommodating the fixation portion and the second electric wire portion for the fixation portion to be movable in the direction of the rotation axis.

The conduit may have one end in the longitudinal direction into which the first electric wire portion is introduced, and the other end in the longitudinal direction at which any one of a guide groove or a guide rail, slide-coupled to an inner circumferential surface of the rotation drum in the rotational direction, is formed in or on an outer peripheral surface of the conduit, and the hollow portion of the rotation drum may have the other one of the guide groove or the guide rail, formed in or on the inner circumferential surface of the rotation drum to correspond to any one of the guide groove or guide rail of the conduit.

The non-contact electric wire reel according to the present invention may further include: a motor controlled to generate a rotational force rotating the rotation drum; a decelerator receiving the rotational force from the motor to decelerate a rotational speed and increase the rotational force; and a power transmission portion transmitting the increased rotational force to the rotation drum.

The power transmission portion may include: a first gear formed on the outer circumferential surface or inner circumferential surface of the rotation drum in the rotational direction of the rotation drum; and a second gear rotated by the decelerator and meshed with the first gear as internal gears or external gears to transmit the rotational force.

The third electric wire portion may be wound on the rotation drum, and the second electric wire portion may be twisted in one direction when the third electric wire portion is wound on the rotation drum to its maximum length, and twisted in the other direction opposite to the one direction when the third electric wire portion is unwound from the rotation drum to its maximum length.

According to another aspect of the present invention, an electric vehicle charging apparatus includes: a charger body including a charging circuit to supply charging power to the electric vehicle; the non-contact electric wire reel attached to a predetermined position of the charger body; and a charging gun connected to an end of the third electric wire portion of the cable and detachably attached to a charging socket of the electric vehicle, wherein an end of the first electric wire portion of the cable is connected to the charging circuit to receive the charging power.

According to another aspect of the present invention, an electric vehicle charging apparatus includes: a charger body including a charging circuit to supply charging power to the electric vehicle; the non-contact electric wire reel; hinges hinge-coupling one end of the conduit to a predetermined position of the charger body; and a charging gun connected to an end of the third electric wire portion of the cable and detachably attached to a charging socket of the electric vehicle, wherein an end of the first electric wire portion of the cable is connected to the charging circuit to receive the charging power.

The electric vehicle charging apparatus may further include a joint frame coupling the one end of the conduit and the charger body to each other, wherein the hinges include: a first hinge hinge-coupling the predetermined position of the charger body and one end of the joint frame with each other; and a second hinge hinge-coupling the other end of the joint frame and the one end of the conduit with each other.

### BRIEF DESCRIPTION OF DRAWINGS

FIG. 1 is a cutaway view of a non-contact electric wire reel according to a first embodiment of the present invention.
FIGS. 2A to 2E are cross-sectional views of a cable applied to the non-contact electric wire reel of the present invention.
FIG. 3 is an exploded view of a non-contact electric wire reel according to a second embodiment of the present invention.
FIG. 4 is a perspective view of a non-contact electric wire reel according to a third embodiment of the present invention.
FIG. 5 is a cutaway view of a non-contact electric wire reel according to the third embodiment of the present invention.
FIG. 6 is a front view of an electric vehicle charging apparatus according to an embodiment of the present invention.
FIG. 7 is a perspective view of an electric vehicle charging apparatus according to another embodiment of the present invention.

### DETAILED DESCRIPTION

Embodiments of the present invention are described in detail with reference to the accompanying drawings. The following detailed description is merely an example, and merely illustrates embodiments of the present invention.

### (First embodiment)

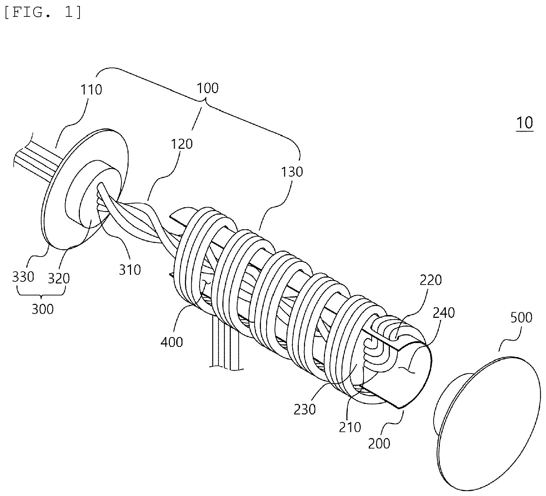

FIG. 1 is a cutaway view of a non-contact electric wire reel according to a first embodiment of the present invention.

Referring to FIG. 1, a non-contact electric wire reel 10 according to the present invention includes: a cable 100 including a plurality of electric wires extending by sequentially including a first electric wire portion 110, a second electric wire portion 120 and a third electric wire portion 130 in its longitudinal direction; a rotation drum 200 configured to allow the cable 100 to be wound on or unwound from its outer circumferential surface by rotation, and including one or more rotation holes 210 and 220 each rotated in a rotational direction of the rotation drum 200; and a fixation portion 300 disposed on one side of the rotation drum 200 in a direction of a rotation axis of the rotation drum 200, and including a fixation hole 310 remaining fixed against the rotation of the rotation drum 200.

Here, the second electric wire portion 120 of the cable 100 may be disposed in a twist section 400 partitioned by the rotation holes 210 and 220 and the fixation hole 310, and may be twisted or untwisted by the rotation of the rotation drum 200.

The cable 100 may be a plurality of power lines for transmitting power to a load, and may further include a communication line for transmitting and receiving a control signal to and from the load. In addition, as shown in FIG. 1, the cable 100 may be a flat cable in which the respective electric wires are connected to each other, or may also be a plurality of electric wires each of which is separately sheathed.

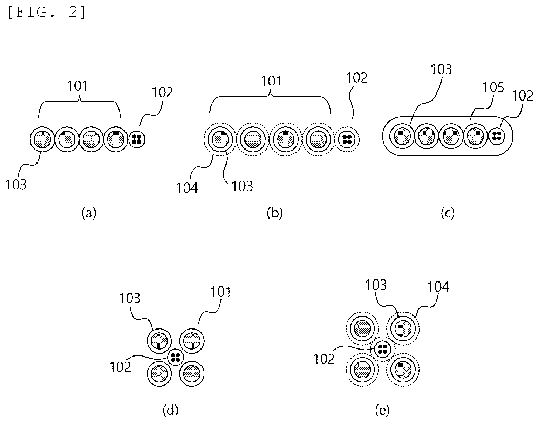

FIGS. 2A to 2E are cross-sectional views of the cable 100 applied to the non-contact electric wire reel 10 of the present invention.

Referring to FIGS. 2A to 2E, the plurality of electric wires of the cable 100 may include a plurality of power lines 101 sheathed by a first insulating sheath 103 for the plurality of electric wires to each be electrically insulated from another electric wire, and transmitting power to the load. The cable 100 may only include the plurality of power lines 101 if the non-contact electric wire reel 10 of the present invention is used for a general purpose. However, the cable 100 may further include a communication line 102 for transmitting and receiving the control signal to and from the load if the non-contact electric wire reel 10 is used for an electric vehicle charging apparatus.

In addition, the cable 100 used in the non-contact electric wire reel 10 of the present invention may be twisted when wound on or unwound from the rotation drum 200. Therefore, the cable 100 of the present invention or at least the second electric wire portion 120 needs to have a structure suitable for these repetitive twists.

Referring to FIG. 2A, the cable 100 or at least the second electric wire portion 120 may be a flat cable in which the plurality of electric wires are each sheathed by the first insulating sheath 103 and then connected to each other. The plurality of electric wires may include the plurality of power lines 101 and the communication line 102. Here, the communication line 102 may not be a single line, but a bundle of the plurality of communication lines used for transmitting and receiving the control signal. As shown in FIG. 2A, in a case where the cable 100 is manufactured in the type of a flat cable in which the plurality of electric wires are connected to each other, when the cable 100 is twisted, the respective electric wires may be neatly arranged without being separated from each other. Therefore, it is possible to equally distribute a stress caused by the twisting to each of the plurality of electric wires, and avoid the stress from being concentrated on a specific electric wire.

In addition, as shown in FIG. 2B, the cable 100 or at least the second electric wire portion 120 may be a flat cable in which the plurality of electric wires are each sheathed by a protection member 104 and then connected to each other. Here, the protection member 104 may be a protective net or protective cover that allows the electric wire to be gently twisted and untwisted. The protection member 104 and the first insulating sheath 103 of the electric wire may be separated from each other, and made of a material allowing the cable 100 to be gently twisted when the cable 100 is twisted and wrung. For example, the protection member 104 may be formed in the shape of a nylon or fibrous mesh, a wire mesh, a net mesh or a resin-based separator.

In addition, as shown in FIG. 2C, the cable 100 or at least the second electric wire portion 120 may be a flat cable in which the plurality of electric wires are each sheathed by the first insulating sheath 103, and then sheathed integrally with each other by a second insulating sheath 105 sheathed on the first insulating sheath 103, for example, a rubber insulation cabtyre (PNCT) cable having a double sheath structure. The double-sheathed second insulating sheath 105 may protect the electric wire from the repeated twisting and untwisting, thereby allowing the cable 100 to have further improved durability.

As shown in FIGS. 2A to 2C, in the case where the cable 100 is manufactured in the type of the flat cable in which the plurality of electric wires are connected to each other, when the cable 100 is twisted, the respective electric wires may be neatly arranged without being separated from each other. Therefore, the plurality of electric wires may not interfere with each other when twisted and untwisted, and the stress may be equally distributed to each electric wire and may not be concentrated on a specific electric wire.

In addition, as shown in FIG. 2D, the plurality of electric wires included in the cable 100 used for the non-contact electric wire reel 10 of the present invention, may each be sheathed by the first insulating sheath 103, and be sheathed independently from each other. Here, in general, the communication line 102 may use a thinner conductor than a conductor of the power line 101. Therefore, the communication line 102 may be disposed to be surrounded by the plurality of power lines 101 to balance an overall balance therebetween. In detail, the communication line 102 may be disposed at the center of a bundle of the plurality of power lines 101. This configuration may be applied to all the electric wire portions of the cable 100, or at least to the second electric wire portion 120 which may be twisted and untwisted. The cable 100 may further include a spacer (not shown) supporting the respective electric wires by allowing the electric wires to be spaced apart from each other at a predetermined distance for the second electric wire portion 120 to be gently twisted.

In addition, as shown in FIG. 2E, in the cable 100 or at least the second electric wire portion 120, the plurality of electric wires may each be sheathed by the protection member 104. Here, the protection member 104 may be a protective net or protective cover that allows the electric wire to be gently twisted and untwisted. The protection member 104 and the first insulating sheath 103 of the electric wire may be separated from each other, and made of a material allowing the cable 100 to be gently twisted when the cable 100 is twisted. For example, the protection member 104 may be formed in the shape of a nylon or fibrous mesh, a wire mesh, a net mesh or a resin-based separator.

In addition, the cable 100 may have one end connected to the power supply and the other end connected to the load, and may continuously extend from one end to the other without any contact. Here, the power supply may be a general commercial power supply or may be an output power supply of a power supply apparatus. Furthermore, the power supply to which one end of the cable 100 is connected may be an output power supply of the electric vehicle charging apparatus.

The cable 100 may be partitioned into three portions by the rotation holes 210 and 220 formed in the rotation drum 200 and rotated together with the rotation drum 200, and by the fixation hole 310 formed in the fixation portion 300 and remaining fixed with respect to the rotation of the rotation drum 200. In detail, it may be defined that the first electric wire portion 110 is a portion from one end of the cable 100, connected to the power supply, to the fixation hole 310, the second electric wire portion 120 is a portion of the cable 100 between the fixation hole 310 and the rotation holes 210 and 220, and the third electric wire portion 130 is a portion from the rotation holes 210 and 220 to the other end of the cable 100. Here, in the twist section 400 defined as a portion of the cable 100 between the fixation hole 310 and the rotation holes 210 and 220, the electric wire of the second electric wire portion 120 may be twisted by the rotation of the rotation holes 210 and 220.

The rotation drum 200 may be configured to wind the cable 100 thereon by being rotated around the rotation axis. The cable 100 may be unwound from the rotation drum 200 when the electric wire reel is used, and may then be wound on the rotation drum 200 after the electric wire reel is used and then stored. Therefore, the rotation drum 200 of the non-contact electric wire reel 10 according to the present invention may be rotated for the cable 100 to be wound thereon or unwound therefrom. Here, the rotation axis of the rotation drum 200 may be in a horizontal, vertical, or diagonal direction. For convenience of explanation, the following description describes a case in which the rotation drum 200 is rotated around its rotation axis in the horizontal direction.

There is no limit on a shape of the rotation drum 200 as long as the rotation drum 200 allows the cable 100 to be wound thereon, and the rotation drum 200 may have a circular cross section. In addition, the rotation drum 200 may have a shape the inside of which is filled, or may have a shape of a cylinder having a hollow portion 240 surrounded by its inner circumferential surface. Here, at least a portion of the twist section 400 in which the second electric wire portion 120 of the cable 100 is disposed, may be formed in the hollow portion 240.

Referring to FIG. 1, the rotation drum 200 may include a rotation plate 230 formed in the hollow portion 240 in a direction transverse to the rotation axis to partition the twist section 400 together with the fixation hole 310. Here, the one or more rotation holes 210 and 220 may include: a first rotation hole 210 formed in the rotation plate 230 for the cable 100 to pass through and partitioning the second electric wire portion 120 and the third electric wire portion 130 from each other; and a second rotation hole 220 formed for the hollow portion 240 and the outside of the rotation drum 200 to communicate with each other, and through which the third electric wire portion 130 passes.

The second electric wire portion 120 may be twisted by the rotation of the rotation drum 200 even with only one of the first rotation hole 210 and the second rotation hole 220. However, the rotation holes 210 and 220 may have the first rotation hole 210 formed in the rotation plate 230 crossing the hollow portion 240 to straighten the second electric wire portion 120 passing through the hollow portion 240, and the second rotation hole 220 formed for the third electric wire portion 130 to be drawn out from the hollow portion 240 to the outside of the rotation drum 200.

The fixation portion 300 may include the fixation hole 310 formed therein and remaining fixed with respect to the rotation of the rotation drum 200, through which the cable 100 passes, and which partitions the cable 100 into the first electric wire portion 110 and the second electric wire portion 120. In addition, as shown in FIG. 1, the fixation portion 300 may include a fixed shaft portion 320 inserted into one side of the hollow portion 240 of the rotation drum 200 to support the rotation of the rotation drum 200.

Referring to FIG. 1, if the twist section 400 is defined as the portion of the cable 100 between the fixation hole 310 and the first rotation hole 210, the second electric wire portion 120 may be disposed in the twist section 400. The first rotation hole 210 may be rotated together with the rotation drum 200 and the fixation hole 310 may remain fixed with respect to the rotation of the rotation drum 200, and the second electric wire portion 120 may thus be twisted or untwisted by the rotation of the rotation drum 200.

In addition, the non-contact electric wire reel 10 according to the present invention may further include a shaft cap portion 500 inserted into the other side of the hollow portion 240 of the rotation drum 200 opposite to the one side of the rotation drum 200 in which the fixation portion 300 is disposed in the direction of the rotation axis of the rotation drum 200. Here, the shaft cap portion 500 may be configured to be rotated together with the rotation drum 200, or may be fixed like the fixation portion 300 and configured to support the rotation of the rotation drum 200.

The fixation portion 300 or the shaft cap portion 500 may remain fixed against the rotation of the rotation drum 200 in various ways, for example, the fixation portion 300 or the shaft cap portion 500 may be put on the ground using a support (not shown) or attached to an apparatus such as a power supply facility.

In addition, the fixation portion 300 and the shaft cap portion 500 may have flanges 270 and 330 formed on respective sides of the fixed shaft portion 320 and the shaft cap portion 500 in the rotational direction of the rotation drum 200 to support the third electric wire portion 130 wound on the outer circumferential surface of the rotation drum 200 not to be separated therefrom. FIG. 1 shows the flanges 270 and 330 are respectively formed on the fixation portion 300 and the shaft cap portion 500. However, the flanges 270 and 330 may be formed at ends of the one side and the other side of the rotation drum 200.

The non-contact electric wire reel 10 of the present invention may have a structure in which the second electric wire portion 120 is twisted or untwisted with respect to the rotation of the rotation drum 200. Accordingly, the non-contact electric wire reel 10 of the present invention having this structure may have no contact from one end of the cable 100 to the other end, unlike the conventional electric wire reel having a slip ring or a brush, and may easily transmit large-capacity power.

The cable 100 used in the non-contact electric wire reel 10 of the present invention may be twisted, and there may thus be a limit on the number of twists to prevent the cable 100 from being damaged due to the twisting.

Therefore, the non-contact electric wire reel 10 of the present invention may increase a diameter of the rotation drum 200 for this limited number of twists to allow the third electric wire portion 130 to be wound on the rotation drum 200 as long as possible. In addition, alternatively or additionally, the non-contact electric wire reel 10 of the present invention may have a maximized value of the limit on the number of twists.

In order to have the increased value of the limit on the number of twists, the non-contact electric wire reel 10 according to the present invention may be configured to allow the second electric wire portion 120 to be twisted in one direction and the opposite direction rather than only in one direction. That is, the non-contact electric wire reel 10 of the present invention may have the following structure: the third electric wire portion 130 is wound on the rotation drum 200, and the second electric wire portion 120 is twisted in one direction when the third electric wire portion 130 is wound on the rotation drum 200 to its maximum length, and twisted in the other direction opposite to the one direction when the third electric wire portion 130 is unwound from the rotation drum 200 to its maximum length.

For example, it may be assumed that the second electric wire portion 120 includes a structure or material allowing the second electric wire portion 120 to be twisted up to two times in one direction. In this case, the second electric wire portion 120 may be twisted twice in one direction and twice in the opposite direction, thereby allowing the third electric wire portion 130 to be wound a total of four times on the rotation drum 200. In other words, the third electric wire portion 130 may be wound the total of four times on the rotation drum 200 in a counterclockwise direction, and the second electric wire portion 120 may be twisted twice in a clockwise direction. When the wound third electric wire portion 130 begins to be unwound, the rotation drum 200 may be rotated in the counterclockwise direction to allow the second electric wire portion 120 to begin to be untwisted. When the rotation drum 200 is rotated twice in the counterclockwise direction and the third electric wire portion 130 is in a state of being unwound two times out of the total of four windings, the second electric wire portion 120 may be completely untwisted. Furthermore, when the rotation drum 200 continues to be rotated in the counterclockwise direction and the third electric wire portion 130 is completely unwound, the second electric wire portion 120 may be in a state of being twisted twice in the counterclockwise direction.

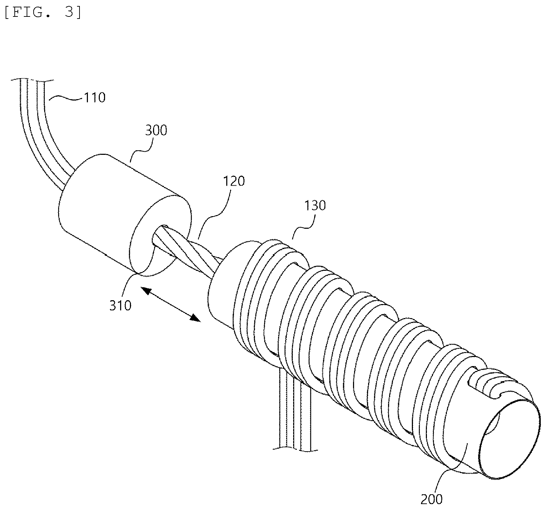

In addition, the fixation portion 300 may be configured to be movable in the direction of the rotation axis of the rotation drum 200 to allow the second electric wire portion 120 to have the increased number of twists. This case is described with reference to FIG. 3 showing a second embodiment of the present invention.

### (Second embodiment)

FIG. 3 is an exploded view of a non-contact electric wire reel 10 according to a second embodiment of the present invention.

In the non-contact electric wire reel 10 of the present invention, the length of the second electric wire portion 120 and the length of the twist section 400 may be the same as each other if the second electric wire portion 120 is not twisted, and the length of the twist section 400 may become shorter than the length of the second electric wire portion 120 if the second electric wire portion 120 is twisted. Therefore, it is possible to reduce a distance between the fixation hole 310 and the rotation holes 210 and 220, defining the twist section 400, to allow the second electric wire portion 120 to be gently twisted.

Referring to FIG. 3, in the non-contact electric wire reel 10 according to a second embodiment of the present invention, the distance between the fixation hole 310 and the rotation holes 210 and 220 in the direction of the rotation axis of the rotation drum 200 may be changed for the twist section 400 of the second electric wire portion 120 to have a smaller length when the second electric wire portion 120 is twisted. In other words, the fixation portion 300 may be slid and introduced into the hollow portion 240 to be moved toward the rotation holes 210 and 220 in the direction of the rotation axis as the second electric wire portion 120 is twisted.

The description above describes the configuration in which the fixation portion 300 is moved toward the rotation holes 210 and 220. However, as long as the distance between the fixation hole 310 and the rotation holes 210 and 220 becomes smaller, it is also possible that the rotation holes 210 and 220 are moved toward the fixation hole 310.

In addition, FIG. 1 shows that the cable 100 is the flat cable. However, each electric wire included in the cable 100 may be sheathed independently from each other as shown in FIG. 3. In this case, the cable 100 may further include a spacer (not shown) supporting the respective electric wires by allowing the electric wires to be spaced apart from each other at a predetermined distance for the second electric wire portion 120 to be gently twisted.

### (Third embodiment)

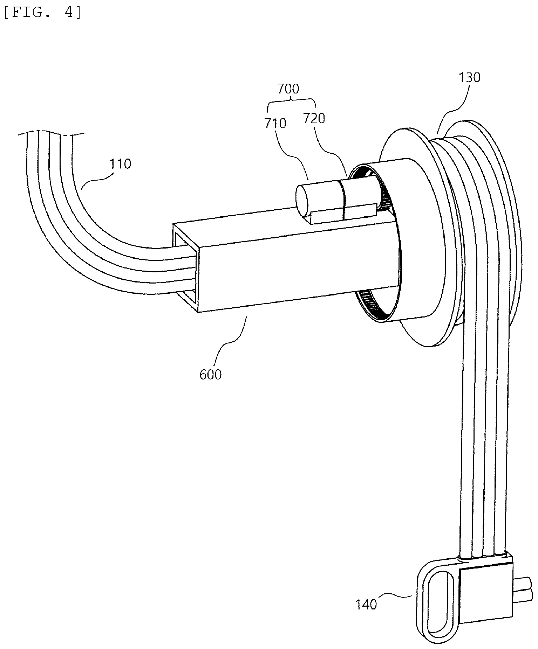

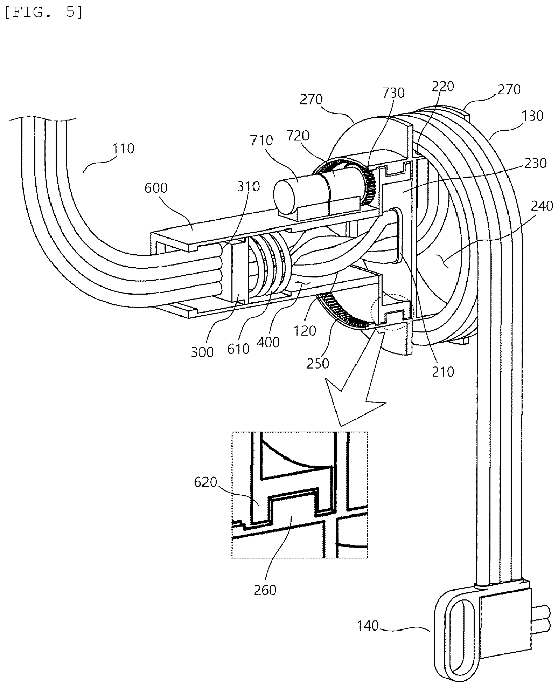

FIG. 4 is a perspective view of a non-contact electric wire reel 10 according to a third embodiment of the present invention, and FIG. 5 is a cutaway view of a non-contact electric wire reel according to the third embodiment of the present invention.

Referring to FIGS. 4 and 5, the non-contact electric wire reel 10 according to a third embodiment of the present invention may further include: a conduit 600 accommodating the fixation portion 300 and the second electric wire portion 120 for the fixation portion 300 to be movable in the direction of the rotation axis; a motor 710 controlled to generate a rotational force rotating the rotation drum 200; and a power transmission portion transmitting the rotational force to the rotation drum 200. In addition, the non-contact electric wire reel 10 may further include a decelerator 720 disposed between the motor 710 and the power transmission portion, and receiving the rotational force from the motor 710 to decelerate a rotational speed and increase the rotational force.

The conduit 600 may be configured to accommodate the fixation portion 300 and the second electric wire portion 120 and couple the two portions to the rotation drum 200 for the fixation portion 300 to be movable in the direction of the rotation axis of the rotation drum 200 as the second electric wire portion 120 is twisted. In more detail, the conduit 600 may have one end in the longitudinal direction into which the first electric wire portion 110 is introduced, and the other end in the longitudinal direction to which the rotation drum 200 is slide-coupled to enable the rotation drum 200 to be rotated.

Referring to FIG. 5, at the other end of the conduit 600, a guide groove 620 may be formed in an outer peripheral surface of the conduit 600 to allow the rotation drum 200 to be slide-coupled to the conduit 600 in the rotational direction, and a guide rail 260 may be formed on an inner circumferential surface of the rotation drum 200, which corresponds to the guide groove 620. However, on the contrary, the guide rail may be formed on the outer peripheral surface of the conduit 600 and the guide groove may be formed in the inner circumferential surface of the rotation drum 200. In addition, FIG. 5 shows that the other end of the conduit 600 is inserted into the hollow portion 240 of the rotation drum 200. On the contrary, either side of the rotation drum 200 may be inserted into the other end of the conduit 600.

The conduit 600 and the fixation portion 300 may have an inner peripheral surface of the conduit 600 and a side surface of the fixation portion 300, respectively, formed in a rectangular or elliptical cylindrical shape rather than a circular shape to allow the fixation portion 300 not to be rotated following the rotation of the rotation drum 200 but to only be moved in the direction of the rotation axis of the rotation drum 200. In addition, the drawing shows the conduit 600 as having the cylindrical shape. However, the conduit 600 is not limited thereto and may be formed in the shape of a frame the inside of which is not sealed.

Referring to FIG. 5, the rotation drum 200 may include a rotation plate 230 formed in the hollow portion 240 in a direction transverse to the direction of the rotation axis to partition the twist section 400 together with the fixation hole 310. Here, the one or more rotation holes 210 and 220 may include: a first rotation hole 210 formed in the rotation plate 230 for the cable 100 to pass through and partitioning the second electric wire portion 120 and the third electric wire portion 130 from each other; and a second rotation hole 220 formed in a surface of the rotation drum 200 for the hollow portion 240 and the outside of the rotation drum 200 to communicate with each other, and through which the third electric wire portion 130 passes.

The second electric wire portion 120 may be twisted by the rotation of the rotation drum 200 even with only one of the first rotation hole 210 and the second rotation hole 220. However, the rotation holes 210 and 220 may have the first rotation hole 210 formed in the rotation plate 230 crossing the hollow portion 240 to straighten the second electric wire portion 120 passing through the conduit 600, and the second rotation hole 220 formed for the third electric wire portion 130 to be drawn out from the hollow portion 240 to the outside of the rotation drum 200.

The rotation drum 200 may have flanges 270 and 330 formed at the ends of one side and the other side of the rotation drum 200 in a rotational direction of the rotation drum 200 to prevent the third electric wire portion 130 wound on the outer circumferential surface of the rotation drum 200 from being separated from the rotation drum 200.

In addition, the rotation drum 200 may be manually rotated when the cable 100 is wound on or unwound therefrom. However, as shown in FIGS. 4 and 5, the rotation drum 200 may be electrically rotated using a rotation drive 700. When the rotation drum 200 is manually rotated, the cable 100 may be manually unwound therefrom and may be wound thereon by rotating the rotating drum 200 using a restoring force of an elastic body (not shown) providing the restoring force in the rotational direction of the rotating drum.

The rotation drive 700 may include the motor 710 and the decelerator 720. Here, the motor 710 may be configured to generate the rotational force for the rotation drum 200 to be rotated, and there is no limit on a type of motor 710 which may be applied thereto, such as a direct current (DC) motor, an alternating current (AC) motor or a step motor.

The decelerator 720 may be configured to receive the rotational force from a rotation axis of the motor 710 to decelerate the rotational speed and increase the rotational force. The decelerator 720 and the motor 710 may be respectively configured as separate portions as shown in FIGS. 4 and 5, or may be provided as a geared motor in which the two components are coupled with each other. The rotational force passing through the motor 710 and the decelerator 720 may directly drive the rotation drum 200 by using a rotation axis of the decelerator 720 as the rotation axis of the rotation drum 200, or the rotational force may be transmitted to the rotation drum 200 through the separate power transmission portion.

The power transmission portion may be configured to transmit the rotational force of the motor 710 to the rotation drum 200, and may include a gear or a pulley and a belt.

As an embodiment, FIG. 5 shows that the power transmission portion includes: a first gear 250 formed on the inner circumferential surface of the rotation drum 200 in the rotational direction of the rotation drum 200; and a second gear 730 rotated along the rotation axis of the decelerator 720 and meshed with the first gear 250 to transmit the rotational force. FIG. 5 shows that the first gear 250 and the second gear 730 are configured as internal gears. However, on the contrary, the first gear 250 may be formed on the outer circumferential surface of the rotation drum 200 for the first gear 250 and the second gear 730 to be meshed with each other as external gears.

In addition, the non-contact electric wire reel 10 according to the present invention may further include an elastic member 610 allowing the fixation portion 300 moved toward the rotation holes 210 and 220 when the second electric wire portion 120 is twisted to return to its original position when the second electric wire portion 120 is untwisted.

The elastic member 610 may be installed in the conduit 600, may have an increased elastic force opposing the fixation portion 300 moved when the second electric wire portion 120 is twisted, and may allow the fixation portion 300 to return to its original position by its elastic force when the second electric wire portion 120 is untwisted. FIG. 5 shows that the elastic member 610 is implemented in the shape of a coil spring disposed in the twist section 400 and surrounding the second electric wire portion 120. However, its shape, position, material or coupling relationship with a surrounding component may be modified in various forms by those skilled in the art as needed.

Referring to FIGS. 4 and 5, in the non-contact electric wire reel 10 according to the present invention, a plug or outlet detachably attached to the load receiving power may be connected to the other end of the cable 100, i.e. an end of the third electric wire portion 130. In detail, when the non-contact electric wire reel 10 of the present invention is applied to the electric vehicle charging apparatus, a charging gun 140 detachably attached to a charging socket of an electric vehicle may be connected to the end of the third electric wire portion 130.

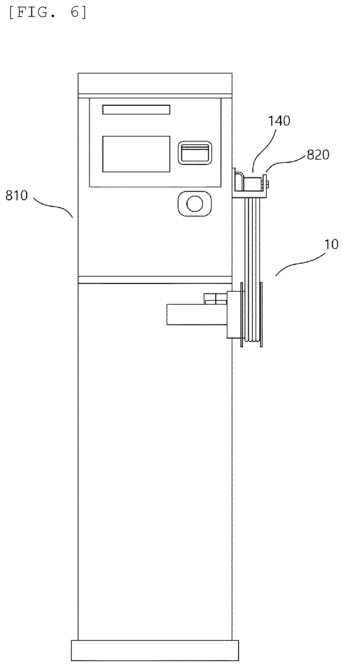

FIG. 6 is a front view of an electric vehicle charging apparatus to which the non-contact electric wire reel 10 is applied according to an embodiment of the present invention.

Referring to FIG. 6, the electric vehicle charging apparatus according to an embodiment of the present invention includes: a charger body 810 including a charging circuit to supply charging power to the electric vehicle; the non-contact electric wire reel 10 attached to a predetermined position of the charger body 810; a charging gun 140 connected to an end of the cable 100 and detachably attached to a charging socket of the electric vehicle; and a charging gun holder 820 disposed on one side of the charger body 810 for the charging gun 140 to be mounted thereon. Here, the end of the cable 100 to which the charging gun 140 is connected may correspond to an end of the third electric wire portion 130, and an end of the first electric wire portion 110 of the cable 100 may be connected to the charging circuit disposed in the charger body 810 to receive the charging power. Here, the non-contact electric wire reel 10 may be directly attached and fixed to the predetermined position on the charger body 810, or may have a position variable within a limited range to increase user convenience.

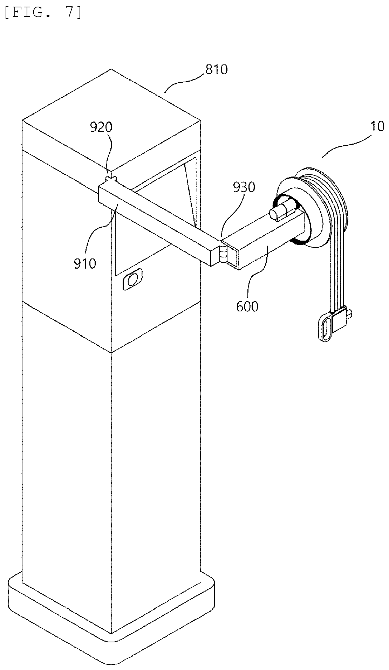

FIG. 7 is a perspective view of an electric vehicle charging apparatus according to another embodiment of the present invention.

Referring to FIG. 7, an electric vehicle charging apparatus according to another embodiment of the present invention includes: a charger body 810 including a charging circuit to supply charging power to the electric vehicle; the non-contact electric wire reel 10; hinges 920 and 930 hinge-coupling one end of the conduit 600 to a predetermined position of the charger body 810; and a charging gun 140 connected to an end of the third electric wire portion of the cable 100 and detachably attached to a charging socket of the electric vehicle. Here, an end of first electric wire portion of the cable 100 may be connected to the charging circuit of the charger body 810 to receive the charging power. In addition, the electric vehicle charging apparatus according to another embodiment may further include a charging gun holder 820 disposed on one side of the charger body 810 to mount the charging gun 140 thereon as shown in FIG. 6, although not shown in FIG. 7.

The hinges 920 and 930 may each be configured to allow the non-contact electric wire reel 10 to have a position variable within the predetermined range from the charger body 810, and may thus allow the electric vehicle to be easily charged in response to various parking positions of the electric vehicle and various positions of the charging socket when charging the electric vehicle. Here, the hinges 920 and 930 may be one hinge to hinge-couple the conduit 600 of the non-contact electric wire reel 10 to the charger body 810, or may be implemented in the form of a multi-joint using two or more hinges and one or more joint frames 910.

Referring to FIG. 7, the electric vehicle charging apparatus of the present invention may further include the joint frame 910 coupling the one end of the conduit 600 and the charger body 810 to each other, wherein the hinges 920 and 930 may include: a first hinge 920 hinge-coupling one end of the joint frame 910 and the predetermined position of the charger body 810 with each other; and a second hinge 930 hinge-coupling the other end of the joint frame 910 and the one end of the conduit 600 with each other. As described above, when the non-contact electric wire reel 10 is coupled to the charger body 810 using the multi-joint, the charging of the electric vehicle may have further increased convenience as the electric wire reel 10 has an increased movable range.

Through the above-described configuration, the non-contact electric wire reel 10 and the electric vehicle charging apparatus having the same according to the present invention may supply a large amount of power to the load by allowing the electric wire to be wound on or unwound from the rotation drum without using any contact such as a slip ring or a brush.

As described above, the present invention may provide the non-contact electric wire reel capable of supplying a large amount of power to the load by allowing the electric wire to be wound on or unwound from the rotation drum without using any contact such as a slip ring or a brush, and the electric vehicle charging apparatus having the same.

Hereinabove, the present invention is described and illustrated based on the embodiments illustrating a principle of the present invention. However, the present invention is not limited to the configuration and operation as shown and described as described above. It is apparent to those of ordinary skill in the art to which the present invention pertains that the present invention may be embodied in another specific form without changing the technical idea or essential characteristics of the present invention. Therefore, it is to be understood that the embodiments described hereinabove are illustrative rather than being restrictive in all aspects. It is to be understood that the scope of the present invention is defined by the claims, and all modifications and alternations derived from the meaning and scope of the claims and their equivalents are included in the scope of the present invention.

## Claims

1. A non-contact electric wire reel comprising:
a cable including a plurality of electric wires extending by sequentially including a first electric wire portion, a second electric wire portion and a third electric wire portion in its longitudinal direction;
a rotation drum configured to allow the cable to be wound on or unwound from its outer circumferential surface by rotation, and including one or more rotation holes each rotated in a rotational direction of the rotation drum; and
a fixation portion disposed on one side of the rotation drum in a direction of a rotation axis of the rotation drum, and including a fixation hole remaining fixed against the rotation of the rotation drum,
wherein the second electric wire portion of the cable is disposed in a twist section partitioned by the rotation holes and the fixation hole, and twisted or untwisted by the rotation of the rotation drum.

2. The non-contact electric wire reel of claim 1, wherein the rotation drum has a shape of a cylinder having a hollow portion surrounded by its inner circumferential surface to accommodate a portion of the cable.

3. The non-contact electric wire reel of claim 2, wherein at least a portion of the twist section is formed in the hollow portion.

4. The non-contact electric wire reel of claim 3, wherein the rotation drum includes a rotation plate formed in the hollow portion in a direction transverse to the rotation axis to partition the twist section together with the fixation hole, and
the one or more rotation holes include:
a first rotation hole formed in the rotation plate for the cable to pass through and partitioning the second electric wire portion and the third electric wire portion from each other; and
a second rotation hole formed for the hollow portion and the outside of the rotation drum to communicate with each other, and through which the third electric wire portion passes.

5. The non-contact electric wire reel of claim 3, wherein the fixation portion includes a fixed shaft portion including the fixation hole formed therein and inserted into one side of the hollow portion of the rotation drum to support the rotation of the rotation drum.

6. The non-contact electric wire reel of claim 2, wherein a distance between the fixation hole and the rotation holes in the direction of the rotation axis is changed for the twist section of the second electric wire portion to have a smaller length when the second electric wire portion is twisted.

7. The non-contact electric wire reel of claim 6, wherein the rotation drum has a shape of a cylinder having a hollow portion to accommodate the second electric wire portion, and
the fixation portion is introduced into the hollow portion to be moved toward the rotation holes in the direction of the rotation axis as the second electric wire portion is twisted.

8. The non-contact electric wire reel of claim 6, further comprising a conduit accommodating the fixation portion and the second electric wire portion for the fixation portion to be movable in the direction of the rotation axis.

9. The non-contact electric wire reel of claim 8, wherein the conduit has one end in the longitudinal direction into which the first electric wire portion is introduced, and the other end in the longitudinal direction at which any one of a guide groove or a guide rail, slide-coupled to an inner circumferential surface of the rotation drum in the rotational direction, is formed in or on an outer peripheral surface of the conduit, and
the hollow portion of the rotation drum has the other one of the guide groove or the guide rail, formed in or on the inner circumferential surface of the rotation drum to correspond to any one of the guide groove or guide rail of the conduit.

10. The non-contact electric wire reel of claim 9, further comprising:
a motor controlled to generate a rotational force rotating the rotation drum;
a decelerator receiving the rotational force from the motor to decelerate a rotational speed and increase the rotational force; and
a power transmission portion transmitting the increased rotational force to the rotation drum.

11. The non-contact electric wire reel of claim 10, wherein the power transmission portion includes:
a first gear formed on the outer circumferential surface or inner circumferential surface of the rotation drum in the rotational direction of the rotation drum; and
a second gear rotated by the decelerator and meshed with the first gear as internal gears or external gears to transmit the rotational force.

12. The non-contact electric wire reel of claim 1, wherein the third electric wire portion is wound on the rotation drum, and
the second electric wire portion is twisted in one direction when the third electric wire portion is wound on the rotation drum to its maximum length, and twisted in the other direction opposite to the one direction when the third electric wire portion is unwound from the rotation drum to its maximum length.

13. An electric vehicle charging apparatus comprising:
a charger body including a charging circuit to supply charging power to the electric vehicle;
the non-contact electric wire reel of any one of claims 1 to 12 attached to a predetermined position of the charger body; and
a charging gun connected to an end of the third electric wire portion of the cable and detachably attached to a charging socket of the electric vehicle,
wherein an end of the first electric wire portion of the cable is connected to the charging circuit to receive the charging power.

14. An electric vehicle charging apparatus comprising:
a charger body including a charging circuit to supply charging power to the electric vehicle;
the non-contact electric wire reel of any one of claims 8 to 12;
hinges hinge-coupling one end of the conduit to a predetermined position of the charger body; and
a charging gun connected to an end of the third electric wire portion of the cable and detachably attached to a charging socket of the electric vehicle,
wherein an end of the first electric wire portion of the cable is connected to the charging circuit to receive the charging power.

15. The electric vehicle charging apparatus of claim 14, further comprising a joint frame coupling the one end of the conduit and the charger body to each other,
wherein the hinges include:
a first hinge hinge-coupling the predetermined position of the charger body and one end of the joint frame with each other; and
a second hinge hinge-coupling the other end of the joint frame and the one end of the conduit with each other.
